# EUROPEAN PATENT SPECIFICATION

(11) **EP 0 672 472 B1**
(45) Date of publication and mention of the grant of the patent: **05.11.1997**
(21) Application number: 94308564.7
(22) Date of filing: 21.11.1994
(51) Int. Cl.: B21C 23/10, B21D 53/02, B23P 15/26

(54) **Method of fabricating a heat exchanger tube array**
Verfahren zur Herstellung einer Rohren-Einheit für Wärmetauscher
Méthode de fabrication d'un ensemble de tubes pour échangeur de chaleur

(30) Priority: 17.12.1993 US 168313
(43) Date of publication of application: 20.09.1995
(73) Proprietor: FORD MOTOR COMPANY, Dearborn, MI 48126 (US)
(72) Inventor: Smith, Warren Albert, Milan, Michigan 48160 (US); Study, Alan Lee, Southfield, Michigan 48076 (US)
(74) Representative: Messulam, Alec Moses

(56) References cited:
- EP-A- 0 556 798
- US-A- 4 761 267
- DATABASE WPI Section Ch, Week 8728 Derwent Publications Ltd., London, GB; Class J08, AN 87-196558 & JP-A-62 127 444 ( SUMITOMO LIGHT META KK) , 9 June 1987
- WELDING INTERNATIONAL, vol. 3,no. 8, 1989 pages 700-710, SUGIYAMA Y. 'BRAZING OF ALUMINIUM ALLOYS'

## Description

This invention relates to the technology of joining extrudable aluminium alloys and more particularly to joining such alloys that are usable in heat exchangers for automotive vehicular applications.

Low cost heat exchange tubes made of an aluminium alloy have been heretofore made with relatively thick walls, such as 0.60 millimetres. Such tubing has been made by a process of casting a billet and extruding or drawing the billet to produce a hollow shape, typical alloys for the billet usually contain silicon (0.3% or more by weight), iron (at least 0.4%), copper (at least 0.15%), manganese (1.0%) and the remainder aluminium.

To achieve thinner walled tubing, the extrudable characteristic of the alloy must be enhanced by employing a purer aluminium alloy containing less than about .3 percent by weight manganese. However, such enhanced-extrudable alloys will not meet extended life requirements because of possible corrosion and lower fatigue strength. Certain elements which retard corrosion in a non extruded product (such as disclosed in U.S. Patent 4,649,087) cannot be added to an extrusion alloy because they retard extrudability. Moreover, brazing of an extruded thin wall aluminium-based tubing often causes extensive penetration of the tubing by the elements of the brazing filler metal, thereby resulting in thinning and poor corrosion resistance from a changed micro structure.

US-A-4,761,267 discloses an aluminium-alloy core material for brazing which comprises 0.10-0.30 wt% of titanium and 0.5-1.0wt% manganese and which may be used in the shape of a tube in the manufacturing of heat exchangers for automobiles. According to the examples, the tubes may be brazed in a vacuum of between 10⁻⁴ and 10⁻⁶Torr using brasing filler materials of the A1-Si or the A1-Si-Mg types.

According to the present invention, there is provided a method of fabricating a heat exchanger tube array, as claimed in claim 1. Preferred embodiments are claimed in independent claims 2 to 7.

The extrudable aluminium alloy used in the method of the invention for thin-walled heat exchange tubing has improved corrosion resistance and has increased strength. The alloy includes titanium in a critical amount to relatively pure aluminium to achieve a first plateau of corrosion resistance, and manganese in a critical amount to achieve a second but higher plateau of corrosion resistance accompanied by an increase in yield strength of at least 10%. Impurities are limited to ultra low levels, particularly iron and silicon, with all other impurities limited to .15 percent by weight of the alloy.

The extrudable brazeable corrosion resistant aluminium alloy, consists of by weight percent, .1-.2 titanium, .6-1.2 manganese, up to .1 silicon, up to .2 iron and other impurities up to .15, with each such other impurity no greater than .03, and the remainder aluminium.

The invention will now be described further, by way of example, with reference to the accompanying drawings, in which:
Figure 1 is an elevational view of a brazed condenser used in an automotive vehicle for which the alloy of this invention has applicability;
Figure 2 is a view of a mechanically assembled condenser used in automotive applications;
Figure 3 is a greatly enlarged perspective sectional view of the tubing used in the condenser of Figure 1;
Figure 4 is a perspective view (partly broken away) of a radiator construction useful in an automotive vehicle fabricated by the method of this invention;
Figure 5 is a greatly enlarged portion of Figure 4;
Figure 6 is a depiction of a polarised light photograph (100 x magnification) of a prior art brazed condenser tube cross-section; and
Figures 7 and 8 are depictions of polarised light photographs (200 x magnification) of a brazed condenser tube cross-section made in accordance with the method and alloy of this invention, Figure 7 being a longitudinal section and Figure 8 being a transverse section.

The highly extrudable aluminium composition used in this invention consists of, by weight percentage: .1-.2 titanium, .6-1.2 manganese, up to .1 silicon, up to .2 iron, and other impurities up to .15, with each such other impurity no greater than .03, and the remainder aluminium. This is a purer aluminium alloy than that used heretofore for making heat exchanger tubing. The alloy has only 1.4 percent additives, and impurities are limited to a total of .45 percent which is an extremely low amount. When the prior art utilised titanium and/or manganese or copper in an aluminium alloy, the titanium and manganese were combined with copper with relatively higher amounts of impurities to provide corrosion resistance based upon complex large particle intermetallics. In this invention, the titanium and manganese are combined with low levels of impurities to enhance corrosion resistance.

The controlled amount of titanium is based upon its ability to change the corrosion morphology from hemispherical pitting to a lateral type attack. Less than .1 percent titanium will not achieve the desired first plateau of corrosion resistance desired by this invention; titanium in excess of .2 may not dissolve adequately in the aluminium base, and may form undesirable intermetallics. Titanium creates a fine grain structure in the as-cast extrusion billet which improves extrudability.

Manganese is added to achieve a still higher plateau of corrosion resistance while also adding needed strength to the aluminium alloy so that it may be extruded in relatively thin tubes having structural integrity. Manganese adds to corrosion resistance of the brazed product by resisting silicon penetration (from the brazing metal) into the extrusion alloy during brazing. Manganese is typically added to aluminium alloys, particularly 3003 or 3005 type, to increase strength. The proper amount of manganese inhibits brazing filler metal penetration when utilised in a brazing application; manganese precipitates as MnAl₆ in fine particles at the grain boundary to act as a blockade to silicon penetration from the filler alloy. This prevents silicon diffusion into the base metal to maintain good corrosion resistance.

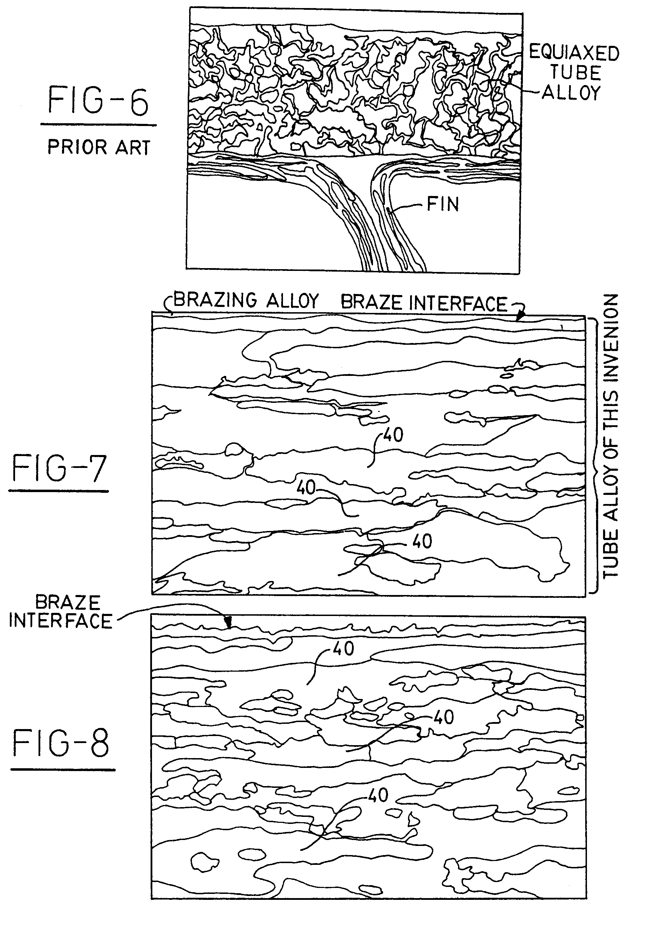

It is critical that silicon and iron be specifically controlled to amounts that avoid reducing corrosion resistance. Silicon is favoured in prior art aluminium alloys to increase strength, but such property must be sacrificed here because of its detriment to extrudability. Iron is limited to .2 percent to eliminate the presence of iron particles that smear on the surface of the tube creating corrosion sites in the extruded material. Iron, when allowed to be present in amounts up to .4-.5 percent, leaves significantly large particles which stick out of the inherent oxide film on the alloy surface. The controlled silicon and iron amounts facilitate formation of elongated grains that are more resistant to corrosion when subjected to the heat of brazing. The grains become enlarged pancake configurations that have a larger dimension in both the X-Y directions as shown in Figures 7-8. Limitation of silicon and iron to the critical amount along with control of manganese, as an additive, induces this grain growth during heat brazing.

The alloy of this invention has a corrosion life that is two times the duration of conventional aluminium alloys such as 3003 or 3005. The alloy herein can typically resist perforation up to 150 hours of exposure per ASTM G-85 method G-43, and has a yield strength of at least 75.8 MPa (11 ksi) in the as-produced state.

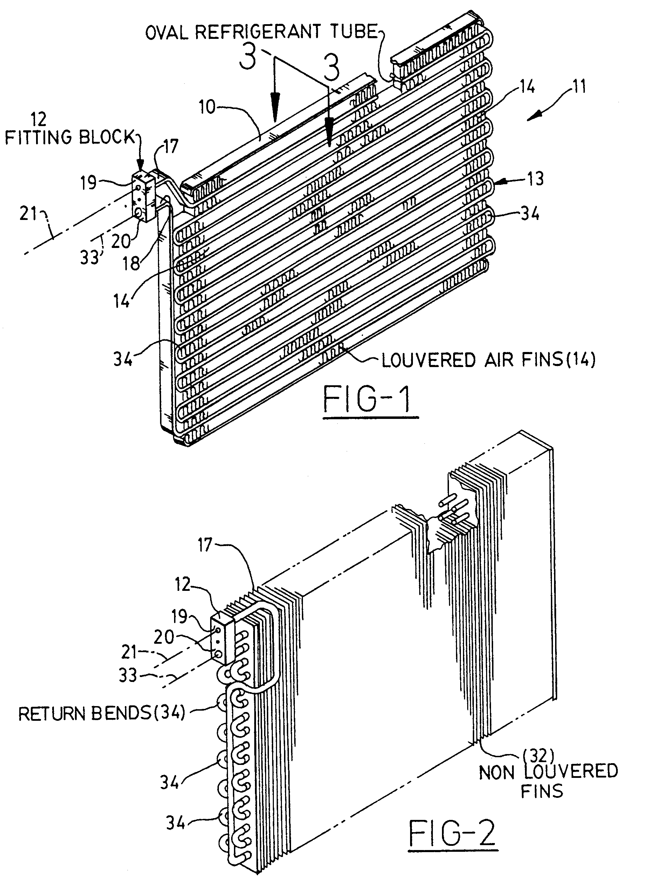

As shown in Figures 1-3, the alloy is particularly useful as the metal for forming extruded tubing 10 for an air conditioning condenser 11. The function of the condenser is to remove the heat absorbed by the evaporator and the energy added by the compressor by means of an approximately constant temperature condensation process. The refrigerant side of the condenser must first bring the refrigerant from a superheated vapour down to saturation point, and then the fluid condenses. Finally, subcooled liquid refrigerant is discharged from the condenser. The tubing has a wall thickness 12 of about .m and is produced by the steps of casting a billet and then extruding or drawing such billet around a die cavity. Tubing may have extruded webbing 15 within the tube to define a series of channels 16 within each tube thereby defining an array. Alternatively, a series of tubes 10 may be arranged side by side to form such tube array. The tube 10 is shaped in a serpentine fashion (shown in Figure 1) and between which is interposed banks 14 of folded or corrugated conductive fin sheet material; the banks 14 permit flow of a heat exchange fluid or gas across the tube array 13 to promote heat transfer. The fins 14 are metallurgically bonded to the tubes by means of a vacuum or controlled atmosphere brazing. Alternatively, the tubes 10 may be linearly straight in some applications without use of the serpentine bends. A fitting block 12, acts as headers 19,20 to connect respectively to the inlet 17 of the tubes and to the outlets 18 of the tube array. A supply line 21 connects to header 19 and a return line 33 connects to the header 20. A round tube array may be assembled mechanically to the fin banks by an expansion process resulting in the construction of Figure 2. Mechanically assembled condenser 30 has a tube/fin heat exchanger made of the aluminium alloy with tubes 31 mechanically expanded into the fins 32 so as to create a heat transfer path. The alloy of this invention is particularly helpful in preventing pitting corrosion of the exposed hairpin turn areas 34 (see Figures 1 and 2) which have proved to be subject to accelerated corrosion in prior art constructions.

Certain method aspects are useful when employing the alloy herein to fabricate brazed heat exchanger tube arrays. The method comprises (a) extruding the previously described aluminium alloy into tubes of a uniform wall thickness of about .4mm; (b) bending and/or arranging the tubes to form a tube array for conducting a fluid medium there through; (c) interposing aluminium based heat exchange means between and in contact with the tubes of the tube array to provide for heat transfer; and (d) brazing the heat exchange means to the tube array by heating to the temperature range of 595°C, the tube array is not adversely affected metallurgically by the brazing operation. Due to the critical content of manganese and the absence of more than .45 percent impurities, the alloy will contain fine precipitates of manganese in a coarse grain structure which will act to minimise silicon penetration from a braze filler alloy during the brazing step.

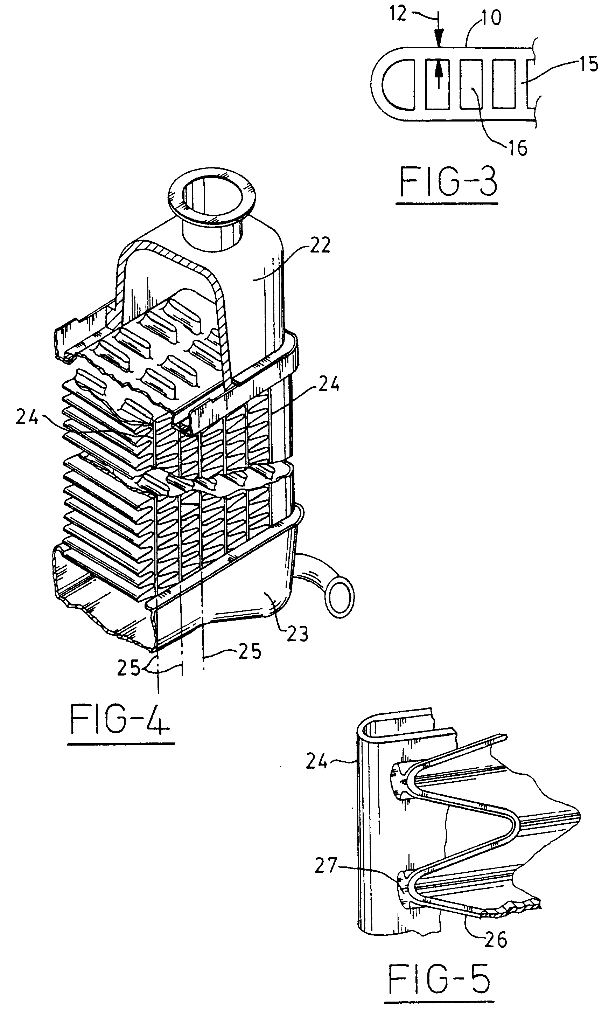

Such method is particularly useful in constructing a radiator, air conditioning condenser, or similar heat exchanger for an automotive vehicle. As shown in Figures 4-5, extruded flat tubing 24, fabricated of the alloy of this invention, is arranged in spaced layers 25 between and in fluid communication with headers 22, 23. Corrugated fins 26 of aluminium based material are stacked between the tube layers. The sheet material of the fins may be clad with a brazing alloy 27 comprising about 10 percent silicon, with the remainder aluminium. The fins are joined to the tubes by brazing which results in fillets 28. Brazing may be carried out by applying heat to the brazing alloy at the joint area up to a temperature of about 595°C which causes the clad material to melt at that location and form the fillets 28 by surface tension. Upon cooling, the fillets bond to the tubing as well as the corrugated fins.

The grain structure of the resulting brazed tubing at the joint will be decidedly different than prior art aluminium alloys. As shown in Figure 6, a magnified cross-section (100x) of a brazed condenser tube section, shows the prior art alloy (by way of polarised light) as having uniform equiaxed grains. The heat of brazing was about 595°C.

In contrast, Figures 7-8 (respectively showing longitudinal and transverse etched (1% HF) sections of tubing at a higher magnification of 200x) show the post-brazed alloy of this invention to have elongated pancake-like grains 40. The elongation occurs in both the X and Y directions as demonstrated by the respective longitudinal and transverse views. Manganese precipitates fine particles at the pancake like grain boundaries with fewer grain boundary sites. The silicon in the brazing alloy does not significantly penetrate laterally into the tubing material.

The corrosion resistance of the alloy specimens, represented in Figures 7 and 8, was tested to have a corrosion life of at least two times the duration of conventional aluminium alloys. This was determined by a cyclical acceleration test (ASTM G-85 method G43) which utilises approximately 0.2 m (eight inch) tube samples, pressurised to 1.03 MPa (150 psig) to test for perforations after being retained in a corrosive environment for several days. The tubing, tested for yield strength, evidenced a strength of at least 75.8 MPa (11 ksi) in the as-extruded condition.

## Claims

1. A method of fabricating a heat exchanger tube array, comprising:
(a) extruding a brazeable corrosion resistant aluminium alloy into tubing with a uniform wall thickness of about 0.3-0.5 mm, said alloy consisting of by weight percent 0.1-0.2 titanium, 0.6-1.2 manganese, up to 0.1 silicon, up to 0.2 iron and other impurities up to 0.15, with each such other impurity no greater than 0.3, and the remainder aluminium;
(b) bending and/or arranging said tubes to form a tube array for conducting a fluid medium there through;
(c) interposing an aluminium-based heat exchange means between and in contact with said tubes of said tube array to provide for heat transfer; and
(d) brazing of said heat exchange means to said tube array by heating to the temperature range of 585°-600°C, whereby the tube array will not be adversely affected metallurgically by the brazing operation.

2. A method of fabricating a heat exchanger as claimed in claim 1 in which the presence of the specified weight range of titanium provides a first plateau of corrosion resistance by changing corrosion morphology to a lateral type and the presence of the specified weight range of manganese provides a second higher plateau of corrosion resistance by resisting brazing metal penetration and providing an increase in yield strength.

3. A method as claimed in either claim 1 or claim 2 in which in step (d) said brazing is carried out with a filler metal containing silicon.

4. A method as claimed in any one of the preceding claims in which brazing is carried out at the brazing temperature for a period of 20-25 minutes in a vacuum of about 10⁻⁵ Torr.

5. A method as claimed in any one of the preceding claims in which the extruded tubing has a micro structure comprising precipitated manganese in the grain boundaries thereof which serve to resist penetration of the brazing filler metal during brazing.

6. A method as claimed in claim 5 in which said manganese in the grain boundaries facilitates heat blocking of the heat in said heat exchanger means during brazing.

7. A method as claimed in either claim 2, claim 5 or claim 6 in which said precipitated manganese is very fine sized relative to the grain structure of the alloy.

## Patentansprüche

1. Verfahren zur Herstellung eines Wärmetauscher-Röhrchengitters, mit folgenden Schritten:
(a) Extrudieren einer lötbaren korrosionsbeständigen Aluminiumlegierung in eine Röhrchenform mit einer gleichförmigen Wandstärke von ca. 0,3-0,5 mm, wobei sich besagte Legierung, in Gewichtsprozent, aus folgenden zusammensetzt: Titan 0,1-0,2, Mangan 0,6-1,2, Silizium bis 0,1, Eisen bis 0,2 und andere Fremdstoffe bis 0,15, wobei jeder dieser anderen Fremdstoffe nicht mehr als 0,3 Gewichtsprozent ausmacht und der Rest Aluminium ist;
(b) Biegen und/oder Zusammenstellen der besagten Röhrchen zu einem Röhrchengitter zur Durchleitung eines flüssigen Mediums durch dieses;
(c) Einsetzen eines Wärmetauschermittels auf Aluminiumbasis zwischen und in Kontakt mit den Röhrchen des besagten Röhrchengitters derart, daß eine Wärmeübertragung zustande kommen kann; und
(d) Hartlöten besagter Wärmetauschermittel auf besagtes Röhrchengitter durch Erwärmen auf eine Temperatur im Bereich von 585°-600°C, bei welcher das Röhrchengitter von dem Lötvorgang metallurgisch nicht nachteilig beeinflußt wird.

2. Verfahren zur Herstellung eines Wärmetauschers nach Anspruch 1, in welchem das Vorliegen von Titan in dem festgelegten Gewichtsbereich eine erste Stufe von Korrosionsbeständigkeit ergibt, indem es die Korrosionsmorphologie in Randkorrosion ändert, und in welchem das Vorliegen von Mangan in dem festgelegten Gewichtsbereich eine zweite, höhere Stufe der Korrosionsbeständigkeit ergibt, indem es dem Eindringen von Lötzusatzmetall entgegenwirkt und eine Erhöhung der Streckgrenze bewirkt.

3. Verfahren nach Anspruch 1 oder Anspruch 2, in welchem in Schritt (c) besagtes Hartlöten mit einem siliziumhaltigen Zusatzmetall erfolgt.

4. Verfahren nach einem beliebigen der vorangehenden Ansprüche, in welchem das Hartlöten bei Löttemperatur über einen Zeitraum von 20-25 Minuten im Vakuum von ca. 10⁻⁵ Torr ausgeführt wird.

5. Verfahren nach einem beliebigen der vorangehenden Ansprüche, in welchem die stranggepreßten Röhrchen eine Mikrostruktur mit an den Korngrenzen derselben ausgefälltem Mangan aufweisen, das dem Eindringen des Hartlöt-Zusatzmetalls während des Lötens entgegenwirkt.

6. Verfahren nach Anspruch 5, in welchem besagtes Mangan an den Korngrenzen die Wärmeabblockung der Wärme in besagten Wärmetauschermitteln während des Lötvorganges erleichtert.

7. Verfahren nach Anspruch 2, Anspruch 5 oder Anspruch 6, in welchem besagtes ausgefälltes Mangan sehr feinkörnig im Vergleich zu dem Korngefüge der Legierung ist.

## Revendications

1. Procédé de fabrication d'un faisceau de tubes d'échangeur de chaleur, comprenant les étapes consistant à :
(a) extruder un alliage d'aluminium résistant à la corrosion et peut être brasé pour former un tube d'une épaisseur de paroi uniforme d'environ 0,3 à 0,5 mm, ledit alliage étant composé, en pourcentage en poids, de 0,1 à 0,2 de titane, de 0,6 à 1,2 de manganèse, de jusqu'à 0,1 de silicium, de jusqu'à 0,2 de fer et d'autres impuretés en quantité allant jusqu'à 0,15, chaque telle autre impureté ne dépassant pas 0,3, et le reste étant de l'aluminium,
(b) couder et/ou disposer lesdits tubes afin de former un faisceau de tubes permettant la circulation d'un milieu fluide au travers de celui-ci,
(c) intercaler un moyen d'échange de chaleur à base d'aluminium entre lesdits tubes et en contact avec lesdits tubes dudit faisceau de tubes afin de permettre un transfert de la chaleur, et
(d) braser ledit moyen d'échange de chaleur sur ledit faisceau de tubes par chauffage dans la plage de températures allant de 585° à 600° C, grâce à quoi le faisceau de tubes ne sera pas affecté de façon néfaste du point de vue métallurgique par l'opération de brasage.

2. Procédé de fabrication d'un échangeur de chaleur selon la revendication 1, dans lequel la présence de la teneur spécifiée en poids de titane procure un premier plateau de résistance à la corrosion en modifiant la morphologie de la corrosion en un type latéral, et la présence de la teneur en poids spécifiée de manganèse procure un second plateau plus élevé de résistance à la corrosion en s'opposant à la pénétration du métal de brasage et en procurant une augmentation de la limite élastique.

3. Procédé selon soit la revendication 1, soit la revendication 2, dans lequel au cours de l'étape (d), ledit brasage est effectué avec un métal d'appoint contenant du silicium.

4. Procédé selon l'une quelconque des revendications précédentes, dans lequel le brasage est effectué à la température de brasage pendant une durée de 20 à 25 minutes sous un vide d'environ 10⁻⁵ Torr.

5. Procédé selon l'une quelconque des revendications précédentes, dans lequel le tube extrudé présente une microstructure comprenant du manganèse précipité dans les limites des grains de celle-ci qui sert à s'opposer à la pénétration du métal d'appoint de brasage pendant le brasage.

6. Procédé selon la revendication 5, dans lequel ledit manganèse dans les limites des grains facilite le barrage thermique de la chaleur dans ledit moyen d'échangeur de chaleur pendant le brasage.

7. Procédé selon soit la revendication 2, soit la revendication 5 soit la revendication 6, dans lequel ledit manganèse précipité est de très petite dimension par rapport à la structure des grains de l'alliage.
